# EUROPEAN PATENT APPLICATION

(11) **EP 1 462 478 A1**
(43) Date of publication of application: **29.09.2004**
(21) Application number: 03006927.2
(22) Date of filing: 26.03.2003
(51) Int. Cl.: C08K 5/00

(54) **Improved long term dimensional stability of pigmented polymer articles**

(71) Applicant: CLARIANT INTERNATIONAL LTD., 4132 Muttenz (CH)
(72) Inventor: The designation of the inventor has not yet been filed

(57) **Abstract**

The object of the invention is the use of sterically hindered piperidine derivatives (HA(L)S) in pigmented polyolefin polymers for the reduction of warpage effects which are induced by light. Preferably, such sterically hindered piperidine derivatives/amines (HA(L)S) are used in various combinations with UV absorbers, processing stabilisers, phenol-type antioxidants and acid scavengers normally used for the purpose of improved lightfastness and improved mechanical properties.

## Description

The influence of pigments on undesired shrinkage or warpage of plastic articles is known and has been observed particularly for those products which have been prepared by injection molding. E.g. injection molded bottle crates in polypropylene or high density polyethylene may be dramatically affected by the use of pigments inducing warpage. Some pigments, known for their nucleation activity, were used e.g. for differentiating extruded PBT tubes in optical fiber loose cables. Also, post-warpage appeared to depend on the type of pigment used. This warpage phenomenon is influenced e.g. by the processing parameters and mould temperatures using standard pigment concentrations of 0.1 %. Another influencing factor is the size and form of the mold. The relative warpage is, in practice, determined by measurement of the dimensions of the polymer sample comparing pigmented and unpigmented ("natural") samples of the same polymer prepared under the same conditions.

Warpage has been observed for a large variety of pigmented polymers and a great number of technical steps have been both reported and disclosed in view of reducing this effect such as by employing reactive PMMA and methyl-methacrylate-vinyl acetate block copolymer types, poly(vinyl chloride-co-vinyl acetate) (VC-VAc), and poly(vinyl chloride-co-vinyl acetate-co- maleic anhydride) (VC-VAc-MA), of so called low profile additives (LPA) (see Huang, Yan-Jyi; Chen, Tzong-Shyang; Huang, Jyh-Gau; Lee, Fuh-Huah; Department of Chemical Engineering, National Taiwan University of Science and Technology, Taipei 106, Taiwan. Abstr. Pap. - Am. Chem. Soc. (2000), 220th PMSE-321. CODEN: ACSRAL ISSN: 0065-7727) some with peroxide groups in their backbone, which could lead to expansion effects during cure. By employing LPA's, usually good volume shrinkage control and acceptable pigmentability for the molded parts were achieved. Other sources report the use of tailor made shrinkage reducing additives (SRA) which is connected with additional technical efforts such as hardening the matrix.

For the achievement of an improved and simplified shrinkage control new concepts are desired which would constitute a progress for the state-of-the-art.

Surprisingly it has been observed that several pigments standardly used for the coloration of polymer matrices develop, by induction of artificial light and/or sunlight, i.e. during the lifetime of the article, some warpage effects which affect the dimensionnal properties of end articles; these effects occur for pigments known for providing warpage during process, such as injection molding, as well as for pigments which are assessed as war-page free for the same process.

Surprisingly it has been found that pigments or combinations of several pigments with conventional polymer stabilizers which are also often used for protection reasons in the polymer matrix lead to significant reduction of warpage effects which are induced by light, as described above, without being obliged to use in addition additives just for war-page control. These stabilizers are some specific members out of the class of sterically hindered piperidine derivates / amines (HA(L)S) which are used alone or in various combinations with UV absorbers, processing stabilisers, phenol-type antioxidants and acid scavengers in pigmented polymers. Such combinations not only improve the warping behavior but also lead to improved lightfastness and improved mechanical properties.

Preferential combinations consist of 0.001 % to 2.0% by weight of one or several pigments , 0.001 % to 2.0% by weight of sterically hindered piperidine derivatives HA(L)S, based on the weight of the polymer.

As already mentioned above, these composition(s) fulfill at the same time stabilization purposes in a sense to retarding chemical decomposition as well as effects which lead to undesired warpage induced by light. There is no necessity to incorporate specific additional components called "low-profile additives" (LPA) such as saturated polyester-based (SPE) or reactive poly(methyl methacrylate) (PMMA) and poly(vinyl acetate)-block- poly(methyl methacrylate) (PVAc-b-PMMA), red phosphorous or phosphates which specifically are dedicated to suppress those "warpage" phenomena.

It has never before been described that warpaging effect in pigmented polymers can be induced only under the influence of light rather than heat. It has never before been described either that sterically hindered piperidine derivatives (HA(L)S) can efficiently avoid deformation ("warpage") of pigmented polymer systems.

The object of the invention is, therefore, the use of sterically hindered piperidine derivatives (HA(L)S) in pigmented polyolefin polymers for the reduction of warpage effects which are induced by light. Preferably, such sterically hindered piperidine derivatives/amines (HA(L)S) are used in various combinations with UV absorbers, processing stabilisers, phenol-type antioxidants and acid scavengers normally used for the purpose of improved lightfastness and improved mechanical properties.

The sterically hindered piperidine derivatives (HA(L)S) used, according to the invention, are the well known group of stabilizers already in use for the purpose of improved lightfastness and improved mechanical properties. Such sterically hindered piperidine derivatives are preferably of the formulae (Ia) - (Ic) 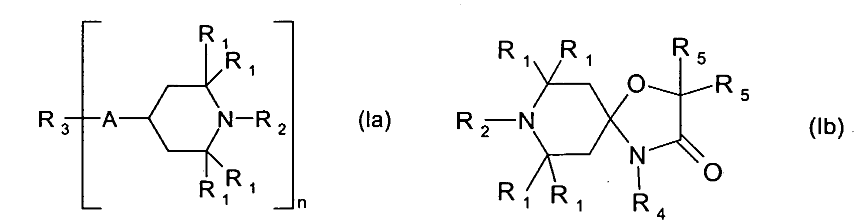 Reaction products of 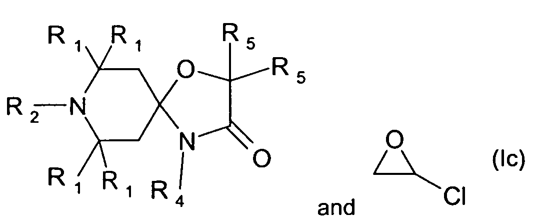 in which, independently of each other,
- A: is -O- or -NR'-,
- R': H, C₁-C₁₈-alkyl or one of the groups 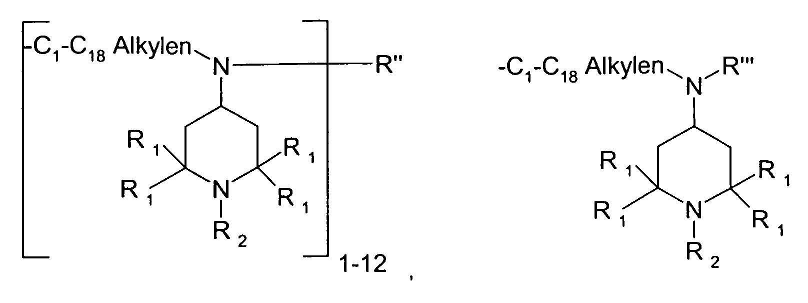
- R": H or C₁-C₁₈-alkyl,
- R"': H, an aliphatic, cycloaliphatic, aromatic or heteroaromatic rest,
- R₁: C₁-C₁₈-alkyl, or two R₁ bound to the common carbon atom represent a C₄-C₈-cycloalkyl rest,
- R₂: H, C₁-C₁₈-alkyl or C₇-C₁₈-alkylaryl,
- R₃: H, an aliphatic, cycloaliphatic, aromatic or heteroaromatic rest with n bounds,
- R₄: C₁-C₁₈-alkyl or -C(O)-C₁-C₁₈-alkyl;
- R₅: H, C₁-C₁₈-alkyl, C₄-C₁₈-cycloalkyl or two R₅ bound to the common carbon atom represent a C₄-C₈-cycloalkyl rest,
- n: is a integer > 0

Preferred hindered piperidine derivatives (HA(L)S) are 2,2,4,4-tetramethyl-7-oxa-3,20-diazadispiro[5.1.11.2]heneicosan-21-on (Hostavin® N20 available from Clariant), the reaction product of Hostavin® N 20 and epichlorhydrin (which together are Hostavin® N 30, available from Clariant), Poly[[6-[(1,1,3,3-tetramethylbutyl)amino]-1,3,5-trazin-2,4-diyl][(2,2,6,6-tetramethyl-4-piperidinyl)imino]-1,6-hexandiyl-[(2,2,6,6-tetramethyl-4-piperidinyl)imino]] (Chimassorb® 944 available from Ciba) as well as C₁₆₋₁₈ fatty acid ester of 2,2,6,6-tetramethyl-piperidinol (Hostavin® 845 available from Clariant), reaction products of 1,6-Hexandiamin, N, N'-bis(2,2,6,6-tetramethyl-4-piperidinyl)-polymer, 2,4,6-trichloro-1,3,5-triazine, N-butyl-1-butanamine and N-butyl-2,2,6,6-tetramethyl-4-piperidinamine (which together are Chimassorb® 2020 available from Ciba) and reaction products of N,N'-ethane-1,2-diylbis(1,3-propanediamine), cyclohexane, peroxidized 4-butylamino-2,2,6,6-tetramethylpiperidine and 2,4,6-trichloro-1,3,5-triazine (which together are Flamestab® NOR^{TM} 116 available from Ciba).

As indicated above, the sterically hindered piperidine derivatives (HA(L)S) are used in pigmented polyolefine polymers in which the warpage effects are observed. Such polymers are polymers of monoolefins and diolefins, for example polypropylene, polyisobutylene, polybut-1-ene, poly-4-methylpent-1-ene, polyisoprene or polybutadiene, as well as polymers of cycloolefins, for example of cyclopentene or norbornene; furthermore polyethylene (which optionally can be crosslinked); for example, high density polyethylene (HDPE), polyethylene of high density and high molar mass (HDPE-HMW), polyethylene of high density and ultrahigh molar mass (HDPE-UHMW), medium density polyethylene (HMDPE), low density polyethylene (LDPE), linear low density polyethylene (LLDPE), branched low density polyethylene (BLDPE).
1. Polyolefins, i.e. polymers of monoolefins as exemplified in the preceding paragraph, in particular polyethylene and polypropylene, can be prepared by various, and especially by the following, methods:
   a) free-radical polymerization (normally under high pressure and at elevated temperature)
   b) catalytic polymerization using a catalyst that normally contains one or more metals of group IVb, Vb, Vlb or VIII of the Periodic Table. These metals usually have one or more ligands, such as oxides, halides, alcoholates, esters, ethers, amines, alkyls, alkenyls and/or aryls that may be either Π- or σ-coordinated. These metal complexes may be in the free form or fixed on substrates, for example on activated magnesium chloride, titanium(III) chloride, alumina or silicon oxide. These catalysts may be soluble or insoluble in the polymerization medium. The catalysts can be active as such in the polymerization or further activators may be used, for example metal alkyls, metal hydrides, metal alkyl halides, metal alkyl oxides or metal alkyloxanes, the metals being elements of groups la, IIa and/or IIIa of the Periodic Table. The activators may be modified, for example, with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polyethylene with polyisobutylene, polypropylene with polyethylene (for example PP/HDPE/LDPE) and mixtures of different types of polyethylene (for example LDPE/HDPE) with one another. Copolymers of monoolefins and diolefins with each other or with other vinyl monomers, for example ethylene-propylene copolymers, linear low density polyethylene (LLDPE) and mixtures thereof with low density polyethylene (LDPE), propylene-but-1-ene copolymers, propylene-isobutylene copolymers, ethylene-but-1-ene copolymers, ethylene-hexene copolymers, ethylene-methylpentene copolymers, ethylene-heptene copolymers, ethylene-octene copolymers, propylene-butadiene copolymers, isobutylene-isoprene copolymers, ethylene-alkyl acrylate copolymers, ethylene-alkyl methacrylate copolymers, ethylene-vinyl acetate copolymers and their copolymers with carbon monoxide or ethylene-acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned under 1), for example polypropylene-ethylene-propylene copolymers, LDPE-ethylene-vinyl acetate copolymers, LDPE-ethylene-acrylic acid copolymers, LLDPE-ethylene-vinyl acetate copolymers, LLDPE-ethylene-acrylic acid copolymers and alternating or random polyalkylene-carbon monoxide copolymers and mixtures thereof with other polymers, for example polyamides.

In these polymers, further additives may be present, for example:
1. Antioxidants
   1.1 Alkylated monophenols, for example 2,6-di-tert-butyl-4-methylphenol, 2-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 24a-methylcyclohexyl)-4,6-dimethylphenol, 2,6-dioctadecyl-4-methylphenol, 2,4.6-tricyclohexylphenol, 2,6-di-tert-butyl-4-meth-oxymethylphenol, 2,6-dinonyl-4-methylphenol, 2,4-dimethyl-6-(1'-methylundec-1'-yl) phenol, 2,4-dimethyl-6-(1'-methylheptadecyl)phenol, 2,4-dimethyl-6-(1'-methyltridec-1'-yl)phenol and mixtures thereof.
   1.2 Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-didodecyl-thiomethyl-4-nonylphenol.
   1.3 Hydroquinones and alkylated hydroquinones, for example 2,6-di-tert-butyl-4-methoxyphenol, 2,5-di-tert-butylhydroquinone, 2,5-di-tert-amylhydroquinone, 2,6-di-phenyl-4-octadecyloxyphenol, 2,6-di-tert-butylhydroquinone, 2,5-di-tert-butyl-4-hydroxy-anisole, 3,5-di-tert-butyl-4-hydroxyanisole, 3,5-di-lert-butyl-4-hydroxyphenyl stearate, bis(3,5-di-tert-butyl-4-hydroxyphenyl) adipate.
   1.4 Tocopherols, for example α-tocopherol, β-tocopherol, γ-tocopherol, δ-tocopherol and mixtures thereof (vitamin E).
   1.5 Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis-(2,6-dimethyl-4-hydroxyphenyl) disulphic.
   1.6 Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methyl-cyclohexyl)phenol], 2,2'-methylenebis(4-methyl-6-cyclohexylphenol), 2,2'-methylene-bis(6-nonyl-4-methylphenol), 2,2'-methylenebis(4,6-di-tert-butylphenol), 2,2'-ethylidene-bis(4,6-di-tert-butylphenol), 2.2'-ethylidenebis(6-tert-butyl-4-isobutylphenol), 2,2'-methy-lenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-bulyl-1-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis'(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl]terephthalate, 1,1-bis(3,5-di-methyl-2-hydroxyphenyl)butane, 2,2-bis(3,5-di-tert-butyl-4-hydroxyphenyl)propane, 2,2-bis(5-tert-butyl-4-hydroxy-2-methylphenyl)-4-n-dodecylmercaptobutane, 1,1,5,5-tetra-(5-tert-butyl-4-hydroxy-2-methylphenyl)pentane.
   1.7 O-, N- and S-benzyl compounds, for example 3,5,3',5'-tetra-tert-butyl-4,4'-di-hydroxydibenzyl ether, octadecyl 4-hydroxy-3.5-dimethylbenzyl mercaptoacetate, tris(3,5-di-tert-butyl-4-hydroxybenzyl)amine, bis(4-tert-butyl-3-hydroxy-2,6-di-methyl-benzyl) dithioterephthalate, bis(3,5-di-tert-butyl-4-hydroxybenzyl) sulphide, isooctyl 3,5-di-tert-butyl-4-hydroxybenzyl mercaptoacetate.
   1.8 Hydroxybenzylated malonates, for example dioctadecyl 2,2-bis(3,5-di-tert-butyl-2-hydrorybenzyl)malonate, dioctadecyl 2-(3-tert-butyl-4-hydroxy-5-methylbenzyl)-malonate, didodecyl mercaptoethyl-2,2-bis(3,5-di-tert-butyl-4-hydroxybenzyl)-malonate, di[4-(1,1,3,3-tetramethylbutyl)phenyl], 2,2-bis(3,5-di-tert-butyl-4-hydroxybenzyl)malonate.
   1.9 Aromatic hydroxybenzyl compounds, for example 1,3,5-tris(3,5-di-tert-buty)-4-hydroxybenzyl)-2,4,6-trimethylbenzene, 1,4-bis(3,5-di-tert-butyl-4-hydroxybenzyl)-2,3,5,6-tetramethylbenzol, 2,4,6-tris(3,5-di-tert-buryl-4-hydroxybenzyl)-phenol.
   1.10 Triazine compounds, for example 2,4-bis-octylmercapto-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octyl-mercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl) isocyanurate, 1,3,5-tris(4-tertbutyl-3-hydroxy-2,6-dimethylbenzyl) isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)hexahydro-1,3,5-triazine, 1,3,5-tris(3,5-dicyclohexyl-4-hydroxybenzyl) isocyanurate.
   1.11 Benzylphosphonates, for example dimethyl 2,5-di-tert-butyl-4-hydroxybenzylphosphonate, diethyl 3,5-di-tert-butyl-4-hydroxybenzylphosphonate, dioctadecyl 3,5-di-tert-butyl-4-hydroxybenzylphosphonate, dioctadecyl 5-tert-butyl-4-hydroxy-3-methyl-benzylphosphonate, the Ca salt of the monoethyl ester of 3,5-di-tert-butyl-4-hydroxybenzylphosphonic acid.
   1.12 Acylaminophenols, 4-hydroxylauramide, 4-hydroxystearanilide, octyl N-(3,5-ditert-butyl-4-hydroxyphenyl)carbamate.
   1.13 Esters of β-(3,5-di-tert-butyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thiaundecanol, 3-thiapentadecanol, trimethyl-hexanediol, trimethylolpropane, 4-hydroxymethyl-1-phospha-2,6,7-trioxabicyclo-[2.2.2]octane.
   1.14 Esters of β-(5-tert-butyl-4-hydroxy-3-methylphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris-(hydroxyethyl) isocyanurate, N,N'-bis(hydroxyethyl)oxalamide, 3-thiaundecanol, 3-thiapentadecanol, trimethylhexanediol, trimethylolpropane, 4-hydroxymethyl-1-phospha-2,6,7-trioxabi-cyclo[2.2.2]octane.
   1.15 Esters of β-(3,5-dicyclohexyl-4-hydroxy-phenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3 thiaundecanol, 3-thiapentadecanol, trimethyl-hexanediol, trimethylolpropane, 4-hydroxymethyl-1-phospha-2,6,7-trioxabicyclo-[2.2.2]octane.
   1.16 Esters of 3,5-di-tert-butyl-4-hydroxyphenylacetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N-bis-(hydroxyethyl)oxalamide, 3-thia-undecanol, 3-thiapentadecanol, trimethyl-hexanediol, trimethylolpropane, 4-hydroxymethyl-1-phospha-2,6,7-trioxabicyclo-[2.2.2]octane.
   1.17 Amides of β-(3,5-di-tert-butyl-4-hydroxy-phenyl)propionic acid, e.g. N,N'-bis(3,5-di-tert-butyl4-hydroxyphenylpropionyl)hexamethylenediamine, N,N'-bis(3,5-di-tert-butyl-4-hydroxyphenylpro-pionyl)trimethylenediamine, N,N'-bis(3,5-di-tert-butyl-4-hydroxy-phenylpropionyl)hydrazine.
   1.18 Substituted benzofuranone compounds for example mixtures of 5,7-di-t-butyl-3-(3,4-dimethylphenyl)-3H-benzofuran-2-one and 5,7-di-t-butyl-3-(2,3-dimethylphenyl)-3H-benzofuran-2-one.
2. UV absorbers and light stabilizers
   2.1 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole. 2-(5'-tert-butyl-2'-hydroxyphenyl)benzotriazole, 2-(2'-hydroxy-5'-(1,1.3,3-tetramethylbutyl)-phenyl)benzo-triazole, 2-(3',5'-di-tert-butyl-2'-hydroxyphenyl)-5-chlorobenzotriazole, 2-(3-tert-butyl-2'-hydroxy-5'-methylphenyl)-5-chlorobenzotriazole, 2-(3'-sec-butyl-5'-tert-butyl-2'-hydroxy-phenyl)benzotriazole, 2-(2'-hydroxy-4'-octoxyphenyl)benzotriazole, 2-(3',5'-di-tert-amyl-2'-hydroxyphenyl)benzotriazole, 2-(3',5'-bis(α,α-dimethylbenzyl-2'-hydroxyphenyl)-benzotriazole, a mixture of 2-(3'-tert-butyl-2'-hydroxy-5'-(2-octyloxycarbonylethyl)-phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbony-lethyl)phenyl)-5-chlorobenzotriazole, 2-(3'-tert-butyl-2'-hydroxy-5'-(2-methoxycarbonyl-ethyl)-phenyl)benzotriazole, 2-(3'-tert-butyl-2'-hydroxy-5'-(2-octyloxycarbonylethyl)-phenyl)benzotriazole, 2-(3'-tert-butyl-5'-[2-(2-ethylhexyloxy)carbonylethyl]-2'-hydroxy-phenyl)benzotriazole, 2-(3'-dodecyl2'-hydroxy-5'-methylphenyl)benzotriazole and 2-(3'-tert-butyl-2'-hydroxy-5'-(2-isooctyloxycarbonylethyl)phenylbenzotriazole, 2,2'-methy-lene-bis[4(1,1,3,3-tetramethylbutyl)-6-benzotriazol-2-ylphenol]; the transesterification product of 2-[3-tert-butyl-5'-(2-methoxycarbonylethyl)-2'-hydroxy-phenyl]benzotriazole with polyethylene glycol 300, [R-CH₂CH₂-COO(CH₂)₃]₂ where R = 3'-tert-butyl-4'-hydroxy-5'-2H-benzotriazol-2-yl-phenyl.
   2.2 2-Hydroxybenzophenones, for example the 4-hydroxy, 4-methoxy, 4-octoxy, 4-decyloxy, 4-dodecyloxy, 4-benzyloxy, 4,2',4'-trihydroxy and 2'-hydroxy-4,4'-dimethoxy derivative.
   2.3 Esters of substituted or unsubstituted benzoic acids, for example 4-tert-butylphenyl salicylate, phenyl salicylate, octylphenyl salicylate, dibenzoylresorcinol, bis(4-tert-butylbenzoyl)resorcinol, benzoylresorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butyl-phenyl 3,5-di-tert-butyl-4-hydroxy-benzoate.
   2.4 Acrylates, for example ethyl α-cyano-β,β-diphenylacrylate or isooctyl α-cyano-β,β-diphenylacrylate, methyl α-carbomethoxycinnamate, methyl α-cyano-β-methyl-p-methoxycinnamate or butyl α-cyano-β-methyl-p-methoxycinnamate, methyl α-carbo-methoxy-p-methoxycinnamate and N-(β-carbomethoxy-β-cyanovinyl)-2-methylindoline.
   2.5 Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of monoalkyl esters, such as of the methyl or ethyl ester, of 4-hydroxy-3,5-di-tert-butylbenzylphosphonic acid, nickel complexes of ketoximes, e.g. of 2-hydroxy-4-methylphenyl undecyl ketoxime, nickel complexes of 1-phenyl-4-lauroyl-5-hydroxypyrazole, with or without additional ligands.
   2.6 Oxalamides, for example 4,4'-dioctyloxyoxanilide, 2,2'-diethoxyoxanilide, 2,2'-dioctyloxy-5,5'-di-tert-butyloxanilide, 2,2'-didodecyloxy-5,5'-di-tert-butyl-oxanilide, 2-ethoxy-2'-ethyloxanilide, N,N'-bis(3-dimethylaminopropyl)-oxalamide, 2-ethoxy-5-tert-butyl-2'-ethyloxanilide and its mixture with 2-ethoxy-2'-ethyl-5,4'-di-tertbutyloxanilide and mixtures of o- and p-methoxy-disubstituted and of o- and p-ethoxy-disubstituted oxanilides.
   2.7 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxy- phenyl)-4,6-bis(2;4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hy-droxy-3-butyloxypropyloxy)phenyl]-4,6-bis(2,4-dimethylphenyl)-1,3,5-triazine, 2-[2-hy-droxy-4-(2-hydroxy-3-octyloxypropyloxy)phenyl]-4,6-bis-(2,4-dimethylphenyl)-1,3,5-triazine.
3. Metal deactivators, for example, N,N'-diphenyloxalamide, N-salicylal-N'-salicyloylhydrazine, N,N'-bis(salicyloyl)hydrazine, N,N'-bis(3,5-di-tert-butyl-4-hydroxyphenylpropionyl)hydrazine, 3-salicyl-oylamino-1,2,4-triazole, bis(benzylidene)-oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butyl-phenyl) phosphite, diisodecyl pentaerythritol diphosphite, bis(2,4-di-tert-butylphenyl) pentaerythri-tol diphosphite, bis(2,6-di-tert-butyl-4-methylphenyl) pentaerythritol diphosphite, bisisodecyloxy pentaerythritol diphosphite, bis(2,4-di-tert-butyl-6-methylphenyl) pentaerythritol diphosphite, bis(2,4,6-tri-tert-butylphenyl) pentaerythritol diphosphite, tristearyl sorbitol triphosphite, tetrakis(2,4-di-tert-butylphenyl) 4,4'-biphenylenediphosphonite, 6-isooctyloxy-2,4,8,10-tetra-tert-butyl-12H-dibenzo[d,g]-1,3,2-dioxaphosphocin, 6-fluoro-2,4,8,10-tetra-tert-butyl-12-methyl-dibenzo[d,g]-1,3,2-dioxaphosphocin, bis(2,4-di-tert-butyl-6-methylphenyl) methyl phosphite, bis(2,4-di-tert-butyl-6-methylphenyl) ethyl phosphite.
5. Peroxide scavengers, examples being esters of ß-thiodipropionic acid, for example the lauryl, stearyl, myristyl or tridecyl ester, mecaptobenzimidazole, the zinc salt of 2-mercaptobenzimidazole, zinc dibutyldithiocarbamate, dioctadecyl disulphide, pentaerythritol tetrakis(ß-dodecylmercapto)propionate.
6. Polyamide stabilizers, examples being copper salts in combination with iodides and/or phosphorus compounds and salts of divalent manganese.
7. Basic costabilizers, examples being melamin, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example Ca stearate, Zn stearate, Mg behenate, Mg stearate, Na ricinoleate, K palmitate, antimony pyrocatecholate or tin pyrocatecholate. Alkali metal salts and alkaline earth metal salts of lactates for example Ca lactate.
8. Nucleating agents, such as benzoic acid, 4-tert-butylbenzoic acid, adipic acid; diphenylacetic acid and their salts, phosphates, phosphonates and phosphinates and their esters and salts or clarifiers, such as derivatives of di-benzylidene sorbitol.
9. Fillers and reinforcing agents, examples being calcium carbonate, silicates, glass fibers, asbestos, talc, kaolin, mica, barium sulphate, metal oxides and hydroxides, carbon black, graphite.
10. Other additives, examples being plasticizers, lubricants, emulsifiers, pigments, optical brighteners, flameproofing agents, antistatics, blowing agents.

Any additional additives can be added to the polyolefines before, together with or after addition of the HA(L)S compounds of the invention. These additives and also the HA(L)S compounds of the invention can be added in this case as solid, in solution or melt as well as in the form of solid or liquid mixtures or masterbatches/concentrates.

The warpage effects to be avoided can be observed with all kinds of pigments used for the coloration of polymers. Such effects are, however, most embarrassing with industrial organic pigments based on azo pigments, quinacridones, phthalocyanines, indanthrones, flavanthrones, pyranthrones, anthraquinones, perylenes, perinones, dioxazines, thioindigo pigments, isoindolines, isoindolinones, organic metal complexes as well as inorganic pigments.

A comprehensive description of those organic pigments is given for example in the book titeled "Industrial Organic Pigments", authors W.Herbst and K.Hunger, 2^{nd} revised ed., publisher VCH, Weinheim, Germany (1997).

The invention will now be illustrated by examples of the use of specific HA(L)S compounds in polyethylene polymer plaques pigmented with three different pigments. These examples should not, however, limit the scope of the invention.

### Examples

General description of sample preparation, exposure and evaluation of results.

PE-HD (type Eltex, producer Solvay) is stabilised with 0.10% of an organophosphite or alternatively organophosphonite stabiliser (like tris(2,4-di-tert.-butylphenyl)phosphite, Hostanox® PAR 24 or alternatively tetrakis-(2,4-di-tert.-butylphenyl)-biphenylene-diphosphonite, Sandostab® P-EPQ, both available from Clariant), 0.05% of a metal stearate (like zinc stearate or calcium stearate) and 0.05% of a phenolic antioxidant (like tetrakismethylene(3,5-di-tert.butyl-4-hydroxyphenyl)-hydrocinnamate, Hostanox® O10 available from Clariant).

The pigment concentration in the final plaques is 0.1 %. The following three different organic pigments have been tested: Pigment Red 48:3, Pigment Yellow 180 and Pigment Yellow 155.

The HA(L)S concentration in the final plaques is 0.2%. Several commercial HA(L)S derivatives have been tested such as Hostavin® N30 (available from Clariant), Chimassorb® 944 (available from Ciba), Chimassorb® 2020 (available from Ciba), Flamestab® NOR™ 116 (available from Ciba) and Hostavin® 845 (available from Clariant).

The PE-HD plaques (thickness 1 mm) are prepared either by means of a heat press or by injection moulding.

Exposure of the plaques takes place alternatively by:
Weather-O-Meter (according to ISO 11341-C): light continuous, dry conditions, radiation energy 0.47 W/mm², black panel temperature 63°C, relative humidity 50%, radiation filter 340 nm.
UV-A (according to DIN 5208-91-A with a black panel temperature of 63°C) : light continuous, dry conditions, relative humidity 50%, radiation filter 340 nm.

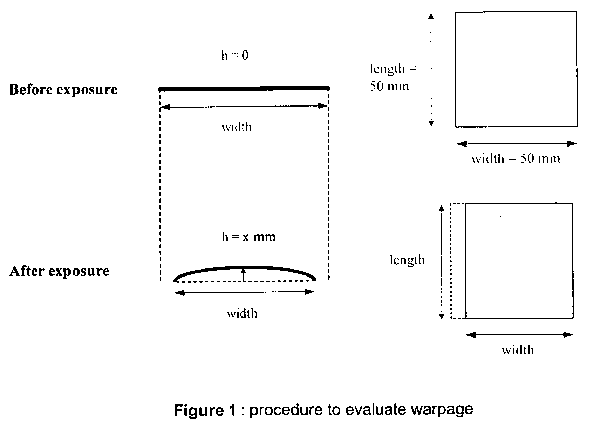

In order to evaluate the warpage of the plaques, the following method is used:
All initial PE-HD plaques (geometries: 50 mm length x 50 mm width x 1 mm thickness) are completely flat. After ageing by artificial exposure, it has been observed that the plaques are not anymore flat but deformed : the 1 mm injection moulded plaques warp especially in the normal (vertical) direction; the samples get a 3D shape due to the deformation. By measuring the sample projecting the final contour in a plane, it results for example that the length is still 50 mm but the width now is 48.5 mm, as shown in Figure 1.

A good indication of this kind of warpage can be assessed by measuring the height taking place in the normal direction. Three parameters have been evaluated :
- the length shift in percent compared to non exposed plaque (error = 0.2%).
- the width shift in percent compared to non exposed plaque (error = 0.2%).
- the height in mm compared to non exposed plaque (error = 0.5 mm).

### EXAMPLE 1

Three different commercial pigments have been tested in a PE-HD matrix (type Eltex, producer Solvay). The pigment concentration is adjusted to 0.1 % and the matrix is stabilised with a standard base process stabilisation (0.10% organophosphite or alternatively organophosphonite / 0.05% metal stearate / 0.05% phenolic antioxidant).

All pressed plaques (thickness 1mm) have been exposed 1500 hours by means of UV-A exposure. Before exposure, no warpage is observed for any formulation.

At the end of exposure the height, width and length are measured. The corresponding data are presented in table 1.

**TABLE 1**

| Dimensional deformation after UVA exposure of pigmented HDPE matrix | | | | |
|---|---|---|---|---|
| exposure time (hours) | 0 h | 1500 h | 1500 h | 1500 h |
| **Pigment type** | **height (mm)** | **height (mm)** | **width shift (%)** | **length shift (%)** |
| no pigment | 0 | 0 | 0,5 | 0,9 |
| Pigment Yellow 155 | 0 | 2 | 0,9 | 0,7 |
| Pigment Yellow 180 | 0 | 2 | 1,2 | 0,7 |
| Pigment Red 48:3 | 0 | 2 | 1,4 | 0,5 |

All 3 pigmented plaques lead to warpage to a similar extent after 1500 hours of UV-A light exposure, only the non pigmented matrix remains flat.

### EXAMPLE 2

The same pigments as used in example 1 have been used and tested in another PE-HD matrix (type Hostalen; producer Basell). After preparing these plaques (thickness 1mm) by heat pressing, exposure during 1500 hours by UV-A took place. Before exposure, no warpage was observed for any formulation. At the end, the height, width and length are measured (see table 2) since warpage has been clearly observed affecting all three pigmented PE-HD plaques.

**TABLE 2**

| Dimensional deformation after UVA exposure of pigmented HDPE matrix | | | | |
|---|---|---|---|---|
| exposure time (hours) | 0 h | 1500 h | 1500 h | 1500 h |
| **Pigment** | **height (mm)** | **height (mm)** | **width shift (%)** | **length shift (%)** |
| no pigment | 0 | 0 | 0,7 | 0,9 |
| Pigment Yellow 155 | 0 | 2,5 | 1,6 | 0,8 |
| Pigment Yellow 180 | 0 | 2,5 | 1,7 | 0,9 |
| Pigment Red 48:3 | 0 | 2,5 | 1,8 | 0,7 |

### EXAMPLE 3

Pigment Red 48:3 has been tested in a PE-HD matrix (type Rigidex, producer BP Chemicals).

All 1 mm injection moulded plaques (thickness each 1 mm) are exposed during 2000 hours in a Weather-O-meter. The results are presented in table 3.

**TABLE 3**

| Dimensional deformation ("warpage") of some pigmented PE-HD samples containing various HA(L)S derivatives after Weather-O-meter exposure. | | | | |
|---|---|---|---|---|
| exposure time (hours) | 0 h | 2000 h | 2000 h | 2000 h |
| **Formulation** | **height (mm)** | **height (mm)** | **width shift (%)** | **length shift (%)** |
| no pigment | 0 | 0 | 0,7 | 0,2 |
| Red 48:3 + no HALS | 0 | 2 | 1,9 | 0,5 |
| Red 48:3 + Hostavin® N 30 | 0 | 0 | 0,3 | 0,3 |
| Red 48:3 + Chimassorb® 944 | 0 | 0 | 0,3 | 0,2 |
| Red 48:3 + Chimassorb® 2020 | 0 | 0 | 0,4 | 0,1 |
| Red 48 3 + Flamestab® NOR™ 116 | 0 | 0 | 0,3 | 0,2 |
| Red 48 3 + Hostavin® 845 | 0 | 0 | 0,4 | 0,1 |

Again the warpage effect is prevented with several HA(L)S after 2000 hours of artificial light exposure.Only the pigmented matrix without HA(L)S leads to warpage after 2000 hours of artificial light exposure.

### EXAMPLE 4

Pigment Yellow 180 has been tested in a PE-HD matrix (type Hostalen, producer Basell).

Heat pressed plaques (thickness 1 mm) are exposed during 1200 hours in a Weather-o-meter. Results are shown in table 4.

**TABLE 4**

| Dimensional deformation after WOM exposure of pigmented HDPE matrix. | | | | |
|---|---|---|---|---|
| exposure time (hours) | 0 h | 1200 h | 1200 h | 1200 h |
| **Formulation** | **height (mm)** | **height (mm)** | **width shift (%)** | **length shift (%)** |
| no pigment | 0 | 0 | 0,9 | 0,8 |
| Yellow 180 | 0 | 1,5 | 1,3 | 0,8 |
| Yellow 180 + Hostavin® N 30 | 0 | 0 | 0,8 | 0,8 |

After 1200 hours of artificial light exposure, the warpage effect is clearly prevented using Hostavin® N 30.

### EXAMPLE 5

Pigment Yellow 180 has been tested in a PE-HD matrix (type Hostalen, producer Basell).

Heat pressed plaques (thickness 1mm) are exposed during 1450 hours by UV-A exposure. The results are shown in table 5.

**TABLE 5**

| Dimensional deformation after UV-A exposure of pigmented PE-HD matrix. | | | | |
|---|---|---|---|---|
| exposure time (hours) | 0 h | 1450 h | 1450 h | 1450 h |
| **Formulation** | **height (mm)** | **height (mm)** | **width shift (%)** | **length shift (%)** |
| no pigment | 0 | 0 | 1,1 | 1,1 |
| Yellow 180 | 0 | 2,5 | 1,9 | 1,2 |
| Yellow 180 + Hostavin®N 30 | 0 | 0 | 0,9 | 0,8 |

As demonstrated in this example, the warpage effect is prevented using Hostavin® N 30 after 1450 hours of UV-A light exposure.

## Claims

1. The use of sterically hindered piperidine derivatives (HA(L)S) in pigmented polyolefin polymers for the reduction of warpage effects which are induced by light.

2. The use according to claim 1 of sterically hindered piperidine derivatives/amines (HA(L)S) in combinations with UV absorbers, processing stabilisers, phenol-type antioxidants and acid scavengers.

3. The use according to claim 1 in which the sterically hindered piperidine derivatives/amines are of the formulae (Ia) - (Ic) 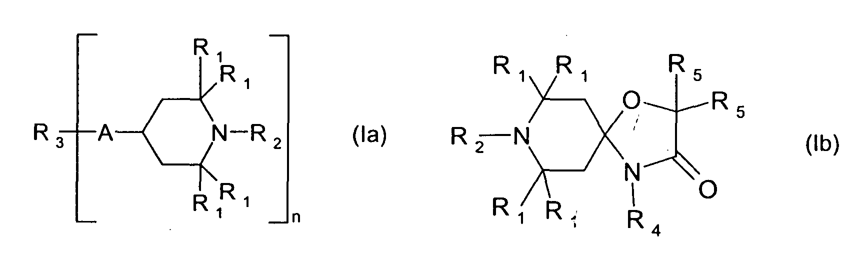 Reaction products of 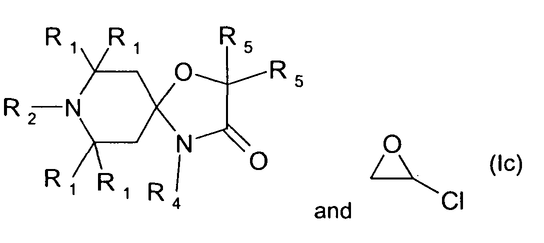 in which, independently of each other,
A is -O- or -NR'-,
R' H, C₁-C₁₈-alkyl or one of the groups 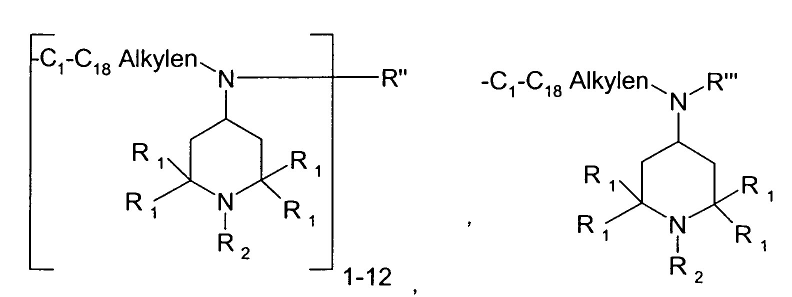
R" H or C₁-C₁₈-alkyl,
R"' H, an aliphatic, cycloaliphatic, aromatic or heteroaromatic rest,
R₁ C₁-C₁₈-alkyl, or two R₁ bound to the common carbon atom represent a C₄-C₈-cycloalkyl rest,
R₂ H, C₁-C₁₈-alkyl or C₇-C₁₈-alkylaryl,
R₃ H, an aliphatic, cycloaliphatic, aromatic or heteroaromatic rest with n bounds,
R₄ C₁-C₁₈-alkyl or -C(O)-C₁-C₁₈-alkyl;
R₅ H, C₁-C₁₈-alkyl, C₄-C₁₈-cycloalkyl or two R₅ bound to the common carbon atom represent a C₄-C₈-cycloalkyl rest,
n is an integer > 0

4. The use according to claim 1 in which 0.001 % to 2.0% by weight of one or several pigments and 0.001 % to 2.0% by weight of sterically hindered piperidine derivatives HA(L)S, based on the weight of polymer, is used.

5. The use according to claim 1 in which the warpage effects are reduced in polypropylene (PP), high density polyethylene (HDPE), polyethylene of high density and high molar mass (HDPE-HMW), polyethylene of high density and ultrahigh molar mass (HDPE-UHMW), medium density polyethylene (HMDPE), low density polyethylene (LDPE), linear low density polyethylene (LLDPE), branched low density polyethylene (BLDPE) and structurally related copolymers and polymer blends.
